**Europäisches Patentamt**

**European Patent Office**

**Office européen des brevets**

(19)

(11) Veröffentlichungsnummer : **0 126 431 B1**

(12) # EUROPÄISCHE PATENTSCHRIFT

(45) Veröffentlichungstag der Patentschrift : **10.09.86**

(21) Anmeldenummer : **84105583.3**

(22) Anmeldetag : **16.05.84**

(51) Int. Cl.⁴ : **B 65 G   1/04**

(54) **Durchschub-/Einschublager für Rollpaletten, Gitterboxen und dergl.**

(30) Priorität : **18.05.83 DE 3318015**

(43) Veröffentlichungstag der Anmeldung :
**28.11.84 Patentblatt 84/48**

(45) Bekanntmachung des Hinweises auf die Patenterteilung : **10.09.86 Patentblatt 86/37**

(84) Benannte Vertragsstaaten :
**AT BE CH DE FR GB IT LI NL SE**

(56) Entgegenhaltungen :
**DE-A- 2 160 336**
**DE-A- 2 818 190 .**
**GB-A- 1 346 027**

(73) Patentinhaber : **Pantzer, Gerhard**
**Sieker Landstrasse 169**
**D-2070 Grosshansdorf (DE)**

**Engelking, Klaus**
**Ginsterweg 3a**
**D-2070 Ahrensburg (DE)**

(72) Erfinder : **Pantzer, Gerhard**
**Sieker Landstrasse 169**
**D-2070 Grosshansdorf (DE)**
Erfinder : **Engelking, Klaus**
**Ginsterweg 3a**
**D-2070 Ahrensburg (DE)**

(74) Vertreter : **Glaeser, Joachim, Dipl.-Ing. et al**
**Dr. M. Kohler, Dipl.-Ing. J. Glaeser Königstrasse 28**
**D-2000 Hamburg 50 (DE)**

EP 0 126 431 B1

## Beschreibung

Die Erfindung bezieht sich auf ein Durchschub/ Einschublager für Rollpaletten, Rollgitterboxen und dergl. nach dem Oberbegriff des Patentanspruchs 1. Es sind derartige Lager als Durchlauflager bekannt, d. h. an dem einen Ende eines Lagerkanals werden die Rollpaletten eingeführt und am anderen gegenüberliegenden Ende entnommen. Es liegt auf der Hand, daß eine Antriebsmöglichkeit vorhanden sein muß, die bewerkstelligt, daß die Rollpaletten von einem Ende zum anderen Ende bewegt werden. Auch müssen die Paletten abgebremst werden, wenn sie aufgrund eines Gefälles vorbewegt werden, was je nach Belagung der Paletten zu Problemen führt.

Für den Durchsatz von gleichartigen Gegenständen in hoher Stückzahl haben sich derartige Durchlauflager bewährt.

In der vorliegenden Anmeldung wird mit Durchschublager ein solches Lager bezeichnet, indem von dem einen Ende her Rollpaletten eingegeben werden und ohne Gefälle oder Antrieb zur Ausgabeseite des Lagers gelangen.

Ein Durchlauflager ist jedoch nicht geeignet, um mehrere unterschiedliche Produkte lagern zu können, und jederzeit zur Auslieferung zur Verfügung zu halten. Für diese Zwecke werden Lager eingesetzt, die in Form eines Regals aufgebaut sind, in welches von einem Gang her gesehen beidseitig nur eine einzige Palette in Regaltiefe eingelagert werden kann, so daß eine Vielzahl unterschiedlicher Produkte/stets so gelagert werden kann, daß jede beliebige Palette jederzeit verfügbar ist.

Zur Lagerung gleichartiger Produkte in höherer Stückzahl ist ein derartiges Regallager nicht geeignet, weil die Speicherdichte aufgrund der Zugriffswege gering ist im Vergleich mit einem Durchlauf-/Durchschublager.

Auch die DE-OS-28 18 190 bezieht sich auf ein typisches Hochregallager, bei welchem in einem senkrechten Schacht ein Fahrzeug senkrecht und horizontal bewegbar ist, wobei zu beiden Seiten des Schachtes Fächer vorhanden sind, die jeweils der Aufnahme einer einzigen Palette dienen. Ein derartiges Lager ist für die Lagerung von Massengütern und für einen Massenumschlag nicht geeignet.

Es sind auch Lager bekannt, z. B. aus der GB-PS-13 46 027, die als Einfahrlager bezeichnet werden können, bei denen für die Fortbewegung der Palette im Lagerkanal ein Hilfsfahrzeug verwendet wird, das von einem Lagergerät aus, welches in einem über die gesamte Lagerhöhe und Lagerlänge sich erstreckenden Schacht horizontal und vertikal bewegbar ist, in die Lagerkanäle einfährt und die Palette dort absetzt, von dort herausholt, vorschiebt oder vorzieht.

Es ist ersichtlich, daß bei der geschilderten Anordnung immer nur eine einzige Palette in eine bestimmte Ebene gehoben wird, in der Ebene zu einem bestimmten Kanal gebracht wird, und in dem Kanal in die Endstellung gebracht werden kann. Dies ist ein verhältnismäßig lang andauernder Vorgang. Ein zweites Lagergerät kann sich jedoch nicht — ohne daß es zu Kollisionen kommt — in dem Schacht bewegen.

Der Erfindung liegt das Problem zugrunde, ein Lager eingangs genannten so auszugestalten, daß es über eine hohe Speicherdichte wie ein Durchlauflager verfügt, dennoch aber auch wie ein Regallager betrieben werden kann, insbesondere an geänderte Anforderungen an das Lager eingestellt werden kann. Soll beispielsweise in einem Fertigungsbereich von der Produktion eines einzigen Gegenstandes in hoher Stückzahl auf die Produktion von mehreren Gegenständen in geringerer Stückzahl übergegangen werden, so soll das Lager an diese Anforderungen anpassungsfähig sein. Darüber hinaus geht es darum, mit einfachen Mitteln einen hohen Lagerumschlag zu erreichen.

Erreicht wird dies durch die Merkmale des kennzeichnenden Teils des Anspruchs 1.

Für die vorliegende Erfindung ist wesentlich, daß Gassen rechtwinklich zu den Lagerkanälen in der Form durch das Lager hindurchgehen, daß Lagerkanäle ungleicher Tiefe bzw. Länge gebildet werden und dabei Durchschubzonen oder Einschubzonen oder auch Zonen kombinierter Art entstehen. Sind beispielsweise zwei parallele Gassen vorgesehen, so können die Lagerkanäle zwischen diesen Gassen im Durchschub betrieben werden, d. h. die Lagerkanäle werden durch das Transportfahrzeug von der einen Seite befüllt und durch das Transportfahrzeug der parallelen Gasse entleert. Die gleichen Lagerkanäle können aber auch bei Bedarf von beiden Seiten im Einschub betrieben werden, indem die beiden Transportfahrzeuge von ihrer Gasse aus unabhängig voneinander die Lagerkanäle bis zu einer bestimmten Tiefe befüllen und von der gleichen Seite auch wieder entleeren.

An den Außenseiten der beiden Gassen können weiterhin beispielsweise Lagerzonen vorgesehen werden, in denen Platz für nur wenige Paletten hintereinander oder auch nur für eine einzige Palette Platz ist, so daß in diesem Bereich des Lagers ein reines Regallager vorhanden ist.

Soll ein Lager oder ein Teil eines Lagers als reines Einschublager verwendet werden, so ist nur eine einzige Gasse erforderlich, von der aus nach beiden Seiten Lagerkanäle befüllt und entleert werden.

Das Transportfahrzeug gemäß der Erfindung ist nicht mit einem zusätzlichen Hilfswagen ausgestattet, es besitzt lediglich eine Einrichtung, mit welcher eine Rollpalette an den Anfangsplatz eines Lagerkanals gebracht werden kann. Hierzu genügt beispielsweise ein hydraulisch ausfahrbarer Stempel, der dafür sorgt, daß die Rollpalette vom Transportfahrzeug in den entsprechenden Lagerkanal geschoben wird.

Die Lagerkanäle haben kein Gefälle, d. h. die Ebenen sind tatsächlich horizontal ausgerichtet.

Dies bedeutet, daß eine Rollpalette, die am Anfangsplatz eines Lagerkanals abgesetzt wird, an dieser Stelle verbleibt und von dort auch wieder entnommen werden kann.

Gemäß der Erfindung sind Kopplungselemente an den Rollpaletten oder für die Rollpaletten vorgesehen, die in einem Lagerkanal hintereinander befindliche Rollenpalleten miteinander verbinden. Es kommt jeder bekannte insbesondere auch selbsttätig wirkende Kopplungsmechanismus in Frage, auch eine magnetische Kopplung. Denkbar sind Kopplungsmechanismen, die durch die Einschubbewegung einer Palette selbst betätigt werden und entsprechend beim Herausnehmen der Palette lösbar sind. Eine besondere Bauart gemäß der Erfindung stellen starre Kopplungselemente an den Rollpaletten dar, die derart gestaltet sind, daß eine Kopplung bzw. Entkopplung durch eine Fahr- oder Hubbewegung des Transportfahrzeuges bewerkstelligt wird.

Im Gegensatz zu den bekannten Durchlauflagern, bei denen eine an den Anfangsplatz eines Lagerkanals gebrachte Rollpalette sich in dem Lagerkanal weiterbewegt, verbleibt bei dem Lager gemäß der vorliegenden Erfindung die eingelagerte Rollpalette auf diesem Anfangsplatz.

Wird eine weitere Palette in diesen Lagerkanal eingelagert, so wird ein Kopplungsvorgang mit der bereits im Kanal befindlichen Palette durchgeführt und die Paletten soweit eingeschoben, daß sich die neu eingelagerte Palette nunmehr am Anfangsplatz des Lagerkanals befindet.

Alle im Lagerkanal befindlichen Paletten bilden durch diese Kopplung einen Zug.

Bei einem Durchschubkanal kann die Entnahme am anderen Kanalende erfolgen, wenn der Lagerkanal Komplett gefüllt ist. Eine Entnahme an der Eingabeseite eines Durchschubkanales ist jederzeit möglich. Die Betriebsweise entspricht dann der eines Einschubkanals, bei dem die Entnahme grundsätzlich an der gleichen Lagerkanalstirnseite erfolgt, wie die Eingabe.

Darüberhinaus ist bei einem Durchschublagerkanal gemäß der vorliegenden Erfindung die Ein- und Ausgabeseite und die Durchschubrichtung frei wählbar.

Soll an einem Lagerkanal eine Palette entnommen werden, so wird mit einer entsprechenden Einrichtung vom Transportfahrzeug der Zug um eine Palette herausgezogen und diese von den im Kanal verbleibenden Rollpaletten abgetrennt.

Die in einem Lagerkanal befindlichen Rollpaletten werden also nur bei einer Ein- oder Auslagerung auschschließlich durch eine Einrichtung, die sich fest auf dem Transportfahrzeug befindet, bewegt und verändern nicht selbstständig ihren Standort.

Ist ein Lager gemäß der Erfindung auf mehrere Ebenen unterteilt, so kann jede dieser Ebenen für sich in der angegebenen Weise betrieben werden.

Bei der vorliegenden Erfindung ist bedeutsam, daß nicht jede Lagerebene bezüglich der Anzahl der Transportfahrzeuge, der Lage der Transportgassen und der Länge bzw. Tiefe der Lagerkanäle gleich gestaltet sein muß.

Beispielsweise könnte in einer Ebene ein reiner Durchschubbetrieb und in der darüberliegenden Ebene ein Einschub- oder Regalbetrieb durchgeführt werden.

Es liegt auf der Hand, beim Regalbetrieb mehrere Paletten hintereinander in einem Lagerkanal anzuordnen, da diese aufgrund der vorhandenen Kopplungselemente auch miteinander verbunden und ohne weitere Hilfsmittel aus dem entsprechenden Lagerkanal zurückgezogen werden können.

Es besteht jedoch auch die Möglichkeit, mindestens zwei Gassen übereinanderliegender Ebenen fluchtend anzuordnen, wobei auch in dieser sich über zwei Etagen erstreckenden Gasse erwünschtenfalls nur ein einziges Transportfahrzeug bewegt werden kann. Es ist weiterhin denkbar, nicht nur die Gassen zweier sondern mehrerer übereinanderliegender Ebenen in entsprechender Weise senkrecht übereinander anzuordnen.

Es ist ersichtlich, daß mit dem Lager gemäß der vorliegenden Erfindung sowohl eine reine Regallagerung als Einschubbetrieb, wie auch eine Durchlauflagerung im Durchschubbetrieb bewerkstelligt werden kann.

Das Lager gemäß der vorliegenden Erfindung ist daher äußerst flexible, da es an sich stark ändernde Anforderungen ohne weiteres angepaßt werden kann. So können auch in jeder Ebene und an jeder beliebigen Stelle nachträglich einzelne Transportgassen eingefügt werden. Da ein Transportfahrzeug in einer Gasse die einzelnen Rollpaletten lediglich an die Anfangsplätze der Lagerkanäle absetzt, können in relativ kurzer Zeit eine hohe Anzahl von Rollpaletten eingelagert und herausgezogen werden, d. h. es kann eine besonders hohe Umschlagsleistung erzielt werden, ohne daß deshalb eine große Anzahl von Transportfahrzeugen erforderlich ist. Das Transportfahrzeug selbst ist verhältnismäßig einfach gebaut, da es keine Bewegungen in senkrechter Richtung durchführen muß und darüber hinaus auch keinen zusätzlichen Hilfswagen zum Einfahren in die Lagerkanäle benötigt.

Die Erfindung wird nachstehend anhand von Zeichnungen beispielsweise erläutert.

Die Figuren 1 und 2 zeigen Draufsichten zweier unterschiedlicher Lagerebenen eines Durchschub-/Einschublagers gemäß der Erfindung,

die Figur 3 zeigt in Detaillierung die Kopplung von Rollpaletten mit starren Kopplungselementen in einer Draufsicht eines Ausschnittes.

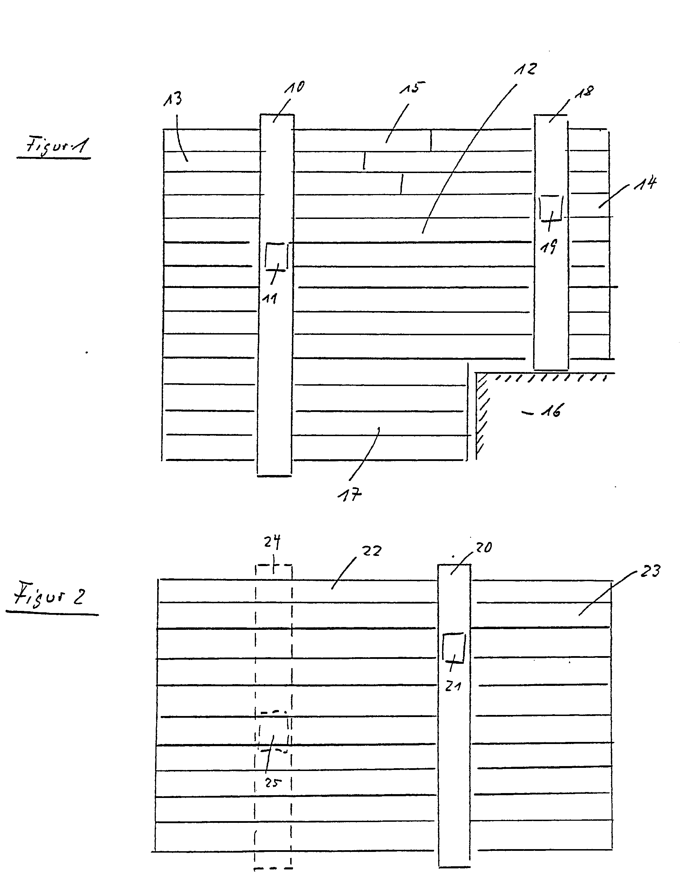

In Figur 1 ist auf der linken Seite mit 10 derjenige Teil des Lagers gezeigt, von dem her das Lager mit Rollpaletten beschickt wird. Mit 18 ist auf der rechten Seite derjenige Teil des Lagers gezeigt, von welchem aus die Rollpaletten aus dem Lager entnommen werden.

In der links gezeigten Gasse 10 bewegt sich ein Transportfahrzeug 11, das die zugeführten Rollpaletten in einer Mehrzahl von Lagerkanälen der Durchschubzone 12 unterbringen kann.

Die Rollpaletten in den einzelnen Lagerkanälen —sind nicht gezeigt, desgleichen nicht Förder- und Transporteinrichtungen, die der Lagerzu- und -abfuhr dienen.

In der rechts gezeigten Gasse 18 verfährt ein Transportfahrzeug 19, das die Rollpaletten aus den Durchschublagerkanälen 12 auslagert und zum Versand bringt.

An den beiden Außenseiten der Transportgassen 10 und 18 sind zusätzliche Lagerzonen 13 und 14 angeordnet. Die Lagerzone 13 wird durch eine Mehrzahl von Einschubkanälen gebildet, die durch das Transportfahrzeug 11 von der Gasse 10 aus befüllt und auch entleert werden. Die Lagerzone 14 enthält Einzelplätze einer Regallagerung und wird durch das Transportfahrzeug 19 bedient.

Mit 15 sind innerhalb des Durchschublagers 12 Lagerkanäle gezeigt, die sowohl im Durchschub als auch von den beiden Gassen 10 und 18 getrennt im Einschub betrieben werden können mit unterschiedlichen Kanaltiefen, die durch die Querstriche angedeutet sind.

Der Bereich 16 stellt einen baulichen Festkörper in dieser Lagerebene dar — z. B. ein Lagerbüro oder ähnliches —, der verhindert, daß die Gasse 18 im Lager weitergeführt werden kann. Die verbleibende Fläche 17 kann jedoch durch Einschub kanäle sinnvoll genutzt werden, die von der Gasse 10 aus bedient werden. Es ist ersichtlich, daß sich das Lager leicht an bauliche Gegebenheiten anpassen läßt.

Die Figur 2 zeigt eine andere Lagerebene des gleichen Lagers — z. B. die nächst höhere — als reines Einschublager ausgebildet. Die Transportgasse 20 mit dem hier verfahrbaren Transportfahrzeug 21 ist so angeordnet, daß die Lagerkanäle 22 u. 23 zu beiden Seiten der Gasse unterschiedliche Tiefe bzw. Länge besitzen, damit den unterschiedlichen Beständen verschiedener Produkte Rechnung getragen werden kann. Mit 24 soll angedeutet werden, daß es möglich ist, an dieser Stelle zu einem späteren Zeitpunkt eine weitere Transportgasse mit einem Transportfahrzeug 25 zu installieren, die die Lagerkanäle 22 in einen Einschubbereich auf der linken Seite und einen Durchschubbereich auf der rechten Seite der neuen Gasse 24 unterteilt.

Auch ist vorstellbar, da die Gassen 10 und 24 der beiden benachbarten Ebenen übereinander liegen, hier ein neues gemeinsames Transportfahrzeug einzusetzen, das nun beide Lagerebenen bedient.

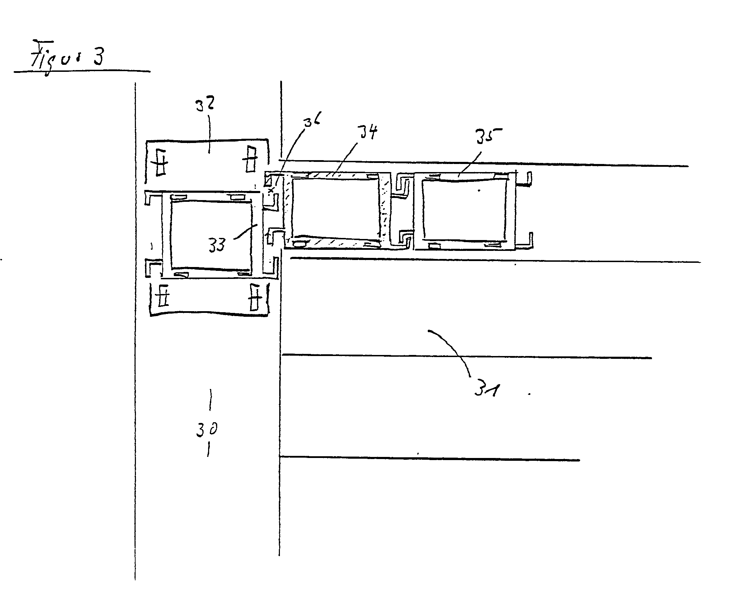

Die Figur 3 zeigt ausschnittsweise eine Transportgasse 30 und rechtwinklich dazu einige Lagerkanäle 31.

In der Transportgasse 30 verfährt das Transportfahrzeug 32, das eine Rollpalette 33 zur Einlagerung in den bereits mit den Rollpaletten 34 und 35 gefüllten Lagerkanal bringt.

Aus der Stellung der Rollpalette 33 auf dem Transportfahrzeug zu der am Anfangsplatz des Lagerkanals stehenden Rollpalette 34 ist ersichtlich, daß das Transportfahrzeug 32 nur eine kurze Fahrbewegung zu machen braucht, damit die starren Kopplungselemente 36 der Rollpaletten in Eingriff kommen und die Rollpaletten einen Zug bilden, der eingeschoben werden kann. Die Rollpalette 33 gelangt dann in die Anfangsstellung des Lagerkanals.

Zwischen den bereits im Kanal stehenden Rollpaletten 34 und 35 ist die Kopplung im Eingriff zu erkennen.

Die Zeichnung zeigt die Kopplungselemente und ihre Anordnung nur beispielhaft ; im wesentlichen ist ersichtlich, daß in diesem Fall ausschließlich durch eine kurze Bewegung des Transportfahrzeuges eine zuverläßige Kopplung hergestellt wird.

**Patentansprüche**

1. Durchschub-/Einschublager zur Aufnahme von Rollpaletten, Rollgitterboxen und dergl. (33) in Lagerkanälen (12, 13, 14, 17, 22, 23), bestehend aus einer oder mehreren übereinander angeordneten Lagerebenen, wobei jede Lagerebene mindestens eine rechtwinklig zu den Lagerkanälen angeordnete Transportgasse (10, 18, 20) aufweist, in denen Transportfahrzeuge (11, 19, 21, 25) für die Ein- bzw. Auslagerung von Rollpaletten in die Lagerkanäle verfahrbar sind, dadurch gekennzeichnet, daß die Ebenen und die Lagerkanäle (12, 13, 14, 15, 17, 22, 23, 31) horizontal ausgerichtet sind, daß die Transportfahrzeuge (11, 19, 21, 25, 32) mit einer Einrichtung versehen sind, die die Rollpaletten jeweils am Anfang eines Lagerkanals absetzt und eine einzulagernde Rollpalette mit einer an dem Anfangsplatz eines Lagerkanals befindlichen Rollpalette (33) koppelt bzw. beim Herausnehmen entkoppelt.

2. Durchschub-/Einschublager nach Anspruch 1, dadurch gekennzeichnet, daß jede beliebige Lagerebene hinsichtlich der Anzahl der Transportfahrzeuge oder auch der Lage der Transportgassen und der Länge bzw. Tiefe der Lagerkanäle anders als die anderen Lagerebene gestaltet ist.

3. Durchschub-/Einschublager nach einem der Ansprüche 1 oder 2, dadurch gekennzeichnet, daß jedes Transportfahrzeug jeweils nur für eine Ebene vorgesehen ist.

4. Durchschub-/Einschublager nach einem der Ansprüche 1 bis 3, dadurch gekennzeichnet, daß die Rollpaletten mit festen Kopplungselementen (z. B. Fig. 3) für eine Kopplung bzw. Entkopplung durch eine Versetzbewegung des Transportfahrzeuges quer zu den Rollpaletten in den Lagerkanälen ausgestattet sind.

**Claims**

1. A push-through/insertion storage system for locating rolling pallets, rolling box pallets and the like (33) in storage channels (12, 13, 14, 17, 22, 23), consisting of one or several superposed storage levels, wherein each storage level comprises, disposed at right angle to the storage channel, at least one transfer alley (10, 18, 20) traversable by transfer vehicles (11, 19, 21, 25) for storing in and withdrawing rolling pallets from the storage channels, characterized in that the levels and the storage channels (12, 13, 14, 15, 17, 22, 23, 31) are horizontally aligned, that the transfer vehicles (11, 19, 21, 25, 32) are provided with a means for setting the rolling pallets down at the entrance to a storage channel and coupling a rolling pallet to be stored to a rolling pallet present in the initial position of a storage channel, or decoupling same, respectively, for its removal.

2. A push-through/insertion storage system according to claim 1, characterized in that each storage level is of a design different from the other storage levels in respect of the number of transfer vehicles or the location of the transfer alleys and the length or the depth of the storage channels.

3. A push-through/insertion storage system according to either claim 1 or claim 2, characterized in that the each transfer vehicle is intended for one each level only.

4. A push-through/insertion storage system according to any one of claims 1 to 3, characterized in that the rolling pallets are equipped with fixed coupling members (e. g. fig. 3) for coupling or decoupling, respectively, by a shifting motion transverse to the rolling pallets in the storage channels by the transfer vehicle.

**Revendications**

1. Entrepôt à passage traversant/engagement unilatéral travaillant par poussée, destiné à recevoir des palettes roulantes, des conteneurs à claire-voie roulants et équivalents (33) dans des canaux de stockage (12, 13, 14, 17, 22, 23), composé d'un étage de stockage ou de plusieurs étages de stockage superposés, chaque étage de stockage présentant au moins une allée de transport (10, 18, 20) disposée perpendiculairement aux canaux de stockage, dans laquelle ou dans lesquelles des véhicules transporteurs (11, 19, 21, 25) peuvent circuler pour mettre en stock des palettes roulantes dans les canaux de stockage ou les extraire de ce stock, caractérisé en ce que les étages et les canaux de stockage (12, 13, 14, 15, 17, 22, 23, 31) sont disposés horizontalement, et en ce que les véhicules transporteurs (11, 19, 21, 25, 32) sont munis d'un dispositif qui dépose les palettes roulantes à l'emplacement initial d'un canal de stockage et accouple une palette roulante à mettre en stock à une palette roulante (33) qui se trouve à l'emplacement initial d'un canal de stockage, ou bien désacouple cette palette de l'autre palette au moment de l'extraction.

2. Entrepôt à passage traversant/engagement unilatéral travaillant par poussée, selon la revendication 1, caractérisé en ce que chaque étage de stockage est d'une configuration différente de celle des autres étages de stockage, en ce qui concerne le nombre des véhicules transporteurs et également la position des allées de transport ainsi que la longueur ou la profondeur des canaux de stockage.

3. Entrepôt à passage traversant/engagement unilatéral travaillant par poussée, selon l'une des revendications 1 et 2, caractérisé en ce que chaque véhicule transporteur n'est prévu que pour un seul étage.

4. Entrepôt à passage traversant/engagement unilatéral travaillant par poussée, selon l'une des revendications 1 à 3, caractérisé en ce que les palettes roulantes sont équipées d'éléments d'accouplement fixes (par exemple figure 3) pour assurer l'accouplement ou le désaccouplement par un déplacement du véhicule transporteur transversalement aux palettes roulantes contenues dans les canaux de stockage.

Figur 1

Figur 2

Figur 3